# EUROPEAN PATENT APPLICATION

(11) **EP 2 785 021 A1**
(43) Date of publication of application: **01.10.2014**
(21) Application number: 14161736.5
(22) Date of filing: 26.03.2014
(51) Int. Cl.: H04L 29/12, G06F 1/16

(54) **Portable information terminal supporting different communications protocol**

(30) Priority: 28.03.2013 JP 2013070501
(71) Applicant: Panasonic Corporation, Kadoma-shi Osaka 571-8501 (JP)
(72) Inventor: Sugita, Takeshi, Osaka, 540-6207 (JP); Ohtsuki, Tetsuji, Osaka, 540-6207 (JP); Furui, Masafumi, Osaka, 540-6207 (JP); Minami, Kazuma, Osaka, 540-6207 (JP); Ide, Azuma, Osaka, 540-6207 (JP); Yamagishi, Shouji, Osaka, 540-6207 (JP)
(74) Representative: Eisenführ Speiser

(57) **Abstract**

A handy terminal 10 is used in a communication system comprising a network in which communication is performed according to a TCP/IP and a network cradle 50 that is provided on the network. The handy terminal 10 communicates with the network cradle 50 according to P2P protocol, and is connected to the network through the network cradle 50. The handy terminal 10 comprises a communication unit that transmits, to the network cradle 50 according to the P2P protocol, second data that includes first data and a second header in P2P protocol. The first data includes a first header that has a specific address of the portable information terminal as a transmission source specific address in IP protocol.

## Description

### BACKGROUND OF THE INVENTION

### Field of the Invention

The present invention is related to a communication system that includes a terminal such as a handy terminal and a communication adapter that connects the terminal to a network.

### Description of the Related Art

Conventionally, a communication adapter is known that is used to connect the terminal such as a handy terminal to a network. Japanese Patent Laid-Open No. 2008-288771 discloses a communication adapter that converts infrared communication into internet communication. Japanese Patent Laid-Open No. 2008-288771 discloses an example in which an internet protocol (IP) address that is set to the communication adapter is notified to the handy terminal, and the handy terminal uses the notified IP address to communicate with a business operation server. In addition, as a further embodiment, an example is disclosed in which the handy terminal obtains an IP address from a dynamic host configuration protocol (DHCP) server, and uses the obtained IP address to communicate with the business operation server. As a result, the number of IP addresses to be used can be suppressed, and the burden of resetting of an IP address, which is associated with failure of the handy terminal, can be reduced.

Japanese Patent Laid-Open No. 2000-253004 discloses a communication adapter in which a media access control (MAC) frame or a packet that is transmitted by a communication device on a local area network (LAN) is not received at an unintended portable information terminal device. Japanese Patent Laid-Open No. 2000-253004 discloses that the communication adapter stores a plurality of MAC addresses, and different MAC addresses are assigned to different portable information terminal devices.

In the method that is disclosed in Japanese Patent Laid-Open No. 2008-288771 in which an IP address of the communication adapter is used by the handy terminal, in a case of a plurality of handy terminals, the same IP address may disadvantageously be allocated to the plurality of handy terminals even when a different handy terminal is brought into connection. Japanese Patent Laid-Open No. 2008-288771 discloses to perform the checkout of a serial number of the handy terminal and timer management as a method of determining whether disconnection is a temporary interruption or a handy terminal is replaced, when communication between the communication adapter and the handy terminal is disconnected. However, the checkout of a serial number is implemented in a higher order application, so that it takes a long time for the check. In addition, since the handy terminal may have been replaced even when a time period during which the communication is disconnected is short, the timer management may not be precise and is lacking of the reliability.

In addition, in a further embodiment that is disclosed in Japanese Patent Laid-Open No. 2008-288771, an IP address is received from the DHCP server. This method, however, requires that an address resolution protocol (ARP) table that stores a correspondence relationship between an IP address and a MAC address should be rewritten. It takes a few seconds to update the ARP table, so that there is a problem of inability to immediately start the communication.

In addition, in Japanese Patent Laid-Open No. 2000-253004, a relationship between a MAC address and an IP address is not described at all. In the method of Japanese Patent Laid-Open No. 2000-253004, when different MAC addresses are allocated to one portable information terminal device, or when one MAC address is allocated to different portable information terminal devices, rewrite of the ARP table occurs, so that there is a problem that is the same as the above-described Japanese Patent Laid-Open No. 2008-288771. In addition, Japanese Patent Laid-Open No. 2000-253004 discloses that ID management is implemented in order to allocate the same MAC address to the same portable information terminal device. In the method, however, when there are a plurality of portable information terminal devices and a plurality of communication adapters, the workload of the ID management becomes large and complicated, and a memory capacity that is required for the ID management increases. When the number of portable information terminal devices is increased or decreased, or when the replacement occurs, registration information for the plurality of communication adapters needs to be updated.

In view of the above-described background, an object of the present invention is to provide a communication system that can start communication immediately without occurrence of update of an ARP table.

### SUMMARY OF THE INVENTION

A portable information terminal according to the present invention is a portable information terminal that is used in a communication system that includes a network in which communication is performed according to a first communication protocol and a communication adapter that is provided on the network, communicates with the communication adapter according to a second communication protocol, and is connected to the network through the communication adapter, the portable information terminal comprising: a communication unit that transmits, to the communication adapter according to the second communication protocol, second data that includes first data and a second header in the second communication protocol, the first data including a first header that has a specific address of the portable information terminal as a transmission source specific address in the first communication protocol. It is noted that the first communication protocol may be an IP protocol, and the second communication protocol may be a P2P protocol. In addition, the first communication protocol may be an IP protocol the transmission and reception of which is performed on the Ethernet (R).

### BRIEF DESCRIPTION OF THE DRAWINGS

FIG. 1 is a diagram illustrating a configuration of a communication system according to an embodiment;
FIG. 2A is a perspective view illustrating an appearance of a handy terminal according to the embodiment, and FIG. 2B is a deployment perspective view when the handy terminal according to the embodiment is viewed from the back surface;
FIG. 3 is a diagram illustrating a configuration of the handy terminal according to the embodiment;
FIG. 4 is a perspective view illustrating an appearance of a network cradle according to the embodiment;
FIG. 5 is a diagram illustrating a configuration of the network cradle according to the embodiment;
FIG. 6A is a diagram illustrating a communication protocol, an IP address, and a MAC address, and FIG. 6B is a diagram illustrating an ARP table;
FIG. 7 is a diagram illustrating a format of data that is transmitted and received between the handy terminal and a data server;
FIG. 8 is a diagram illustrating an outline of processing in the communication system according to the embodiment;
FIG. 9 is a diagram illustrating an outline of processing in the communication system according to the embodiment;
FIG. 10 is a diagram illustrating an operation of the network cradle according to the embodiment;
FIG. 11 is a diagram illustrating an operation of the network cradle according to the embodiment;
FIG. 12 is a diagram illustrating an effect when there are a plurality of handy terminals and a plurality of network cradles; and
FIG. 13 is a diagram illustrating an effect when there are a plurality of handy terminals and a plurality of network cradles.

### DETAILED DESCRIPTION OF THE PREFERRED EMBODIMENTS

The communication system according to the embodiments of the present invention is described below with reference to the drawings.

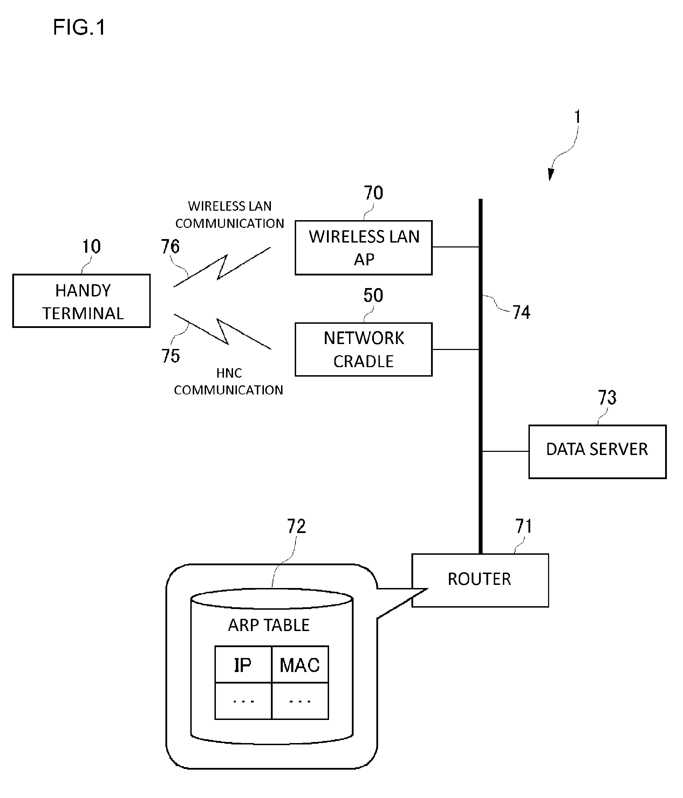

FIG. 1 is a diagram illustrating a configuration of a communication system 1 according to an embodiment. The communication system 1 according to the embodiment includes a handy terminal 10, a network cradle 50 that connects the handy terminal 10 to a network, an access point of a wireless LAN (referred to as "wireless LAN AP (Access Point)" in FIG. 1) 70, and a data server 73 that exists on a network 74. The network cradle 50, the access point 70, and the data server 73 are connected to the network 74. In FIG. 1, the single handy terminal 10, the single network cradle 50, and the single access point 70 are illustrated, but actually, a plurality of handy terminals 10, a plurality of network cradles 50, and a plurality of access points 70 may be provided.

In the network 74 according to the embodiment, a physical layer and a data link layer are defined by the Ethernet (R), a network layer and a transformer port layer are defined by the TCP/IP. In a proximity non-contact communication channel 75 that connects the handy terminal 10 and the network cradle 50, high-speed noncontact communication (hereinafter referred to as "HNC") is performed according to a P2P protocol. In the embodiment, although the TCP/IP and the P2P are used as an example, the present invention may be applied to a combination of communication protocols other than the TCP/IP and the P2P.

The network cradle 50 according to the embodiment corresponds to a communication adapter according to the present invention. The network cradle 50 has a cradle shape, and the handy terminal 10 can be mounted on the network cradle 50. When the handy terminal 10 is mounted on the network cradle 50, the network cradle 50 charges the handy terminal 10.

The handy terminal 10 is connected to the network 74 through the access point 70, and connected to the network 74 through the network cradle 50. When the handy terminal 10 is mounted on the network cradle 50, the handy terminal 10 and the network cradle 50 are held stably in a state in which a communication coupler of the network cradle 50 and a communication coupler of the handy terminal 10 are arranged in close proximity. As a result, non-contact communication between the handy terminal 10 and the network cradle 50 can be achieved at a very high-speed.

The data server 73 is connected to the network 74, and the handy terminal 10 communicates with the data server 73 through the network 74. As a result, the handy terminal 10 transmits data that has been accumulated by a business operation, to the data server 73, and received update data in a customer DB from the data server 73. In addition, the handy terminal 10 can receive update data of firmware that is included in the handy terminal 10 itself and the network cradle 50, from the data server 73. It is noted that, in the embodiment, when the firmware of the network cradle 50 is updated, first, the handy terminal 10 receives update data from the data server 73 once. In addition, the handy terminal 10 updates the firmware of the network cradle 50 using the update data or the network cradle 50 updates the firmware by receiving the update data from the handy terminal 10.

In the network 74, a router 71 that controls packet transmission in the network 74 is provided. The router 71 includes an ARP (address resolution protocol) table 72. The ARP table 72 is a table that stores a correspondence relationship between an IP address and a MAC address. When a new handy terminal 10 is introduced, when a new IP address is set to the handy terminal 10, or the like, the information of the new handy terminal 10 (for example, the relationship between the new IP address and the MAC address of the new handy terminal 10) is registered or updated to or in the ARP table 72.

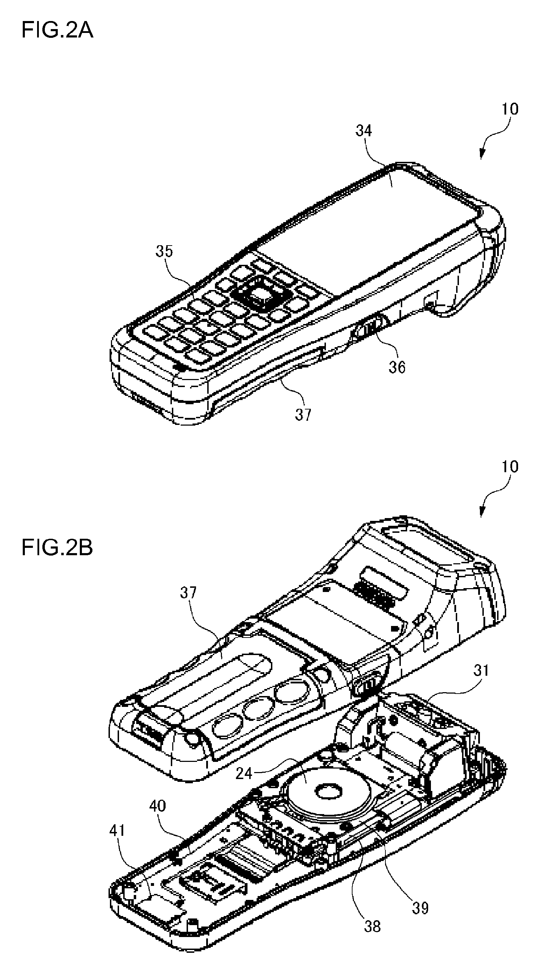

FIG. 2A is a perspective view of an appearance of the handy terminal 10. On the front surface of the handy terminal 10, a display panel 34 and an input key 35 are provided. The display panel 34 is touch-screen, and input of information can be performed on the display panel 34 through a finger, a stylus, or the like. On the side surface of the handy terminal 10, a scan button 36 is provided. The scan button 36 is a button to start of read of a bar code by a bar code scanner unit 31 that is described later. On the back surface of the handy terminal 10, a battery accommodation unit 37 is provided, and the part of the battery accommodation unit 37 is illustrated in FIG. 2A.

FIG. 2B is a deployment perspective view when the handy terminal 10 is viewed from the back surface. On the back surface of the handy terminal 10, the bar code scanner unit 31 that irradiates laser light is provided. There are a main-board 38, a sub-board 39, and a keyboard board 40 on which various electronic circuits are mounted, inside the handy terminal 10. In addition, the handy terminal 10 includes a non-contact power receiving coil 24 that is used to perform charging and a high-speed proximity non-contact communication coupler board 41 that is used to perform high-speed proximity non-contact communication.

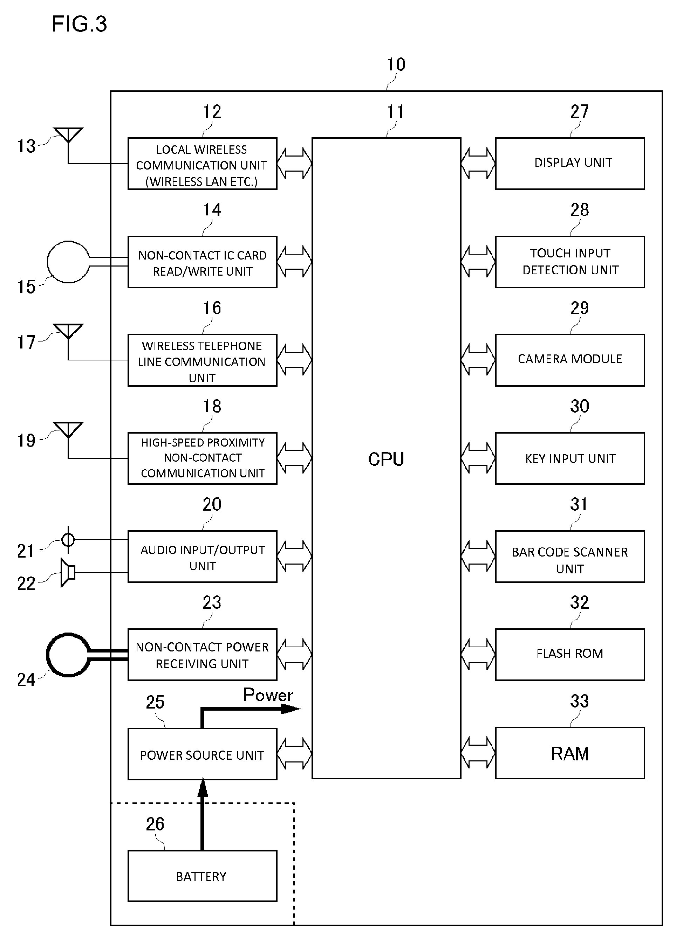

FIG. 3 is a diagram illustrating a configuration of the handy terminal 10. The handy terminal 10 includes a central processing unit (CPU) 11 that is a control unit, and various circuits are connected to the CPU 11. A local wireless communication unit 12 is connected to a local wireless communication antenna 13, and for example, has a function that performs wireless LAN communication (Bluetooth (R) or the like) using a local wireless communication channel 76 illustrated in FIG. 1. A non-contact IC card read/write unit 14 is connected to a non-contact IC card communication antenna 15, and has a function to communicate with a non-contact IC card and read/write data to the IC card. A wireless telephone line communication unit 16 is connected to a wireless telephone antenna 17, and has a function to perform communication through a wireless telephone line that is not illustrated (for example, a mobile phone line such as W-CDMA, CDMA2000, and LTE).

A high-speed proximity non-contact communication unit 18 is connected to a high-speed proximity non-contact communication coupler 19, and has a function to perform high-speed proximity non-contact communication with the network cradle 50 when the handy terminal 10 is mounted on the network cradle 50. The high-speed proximity non-contact communication coupler 19 is mounted on the high-speed proximity non-contact communication coupler board 41 illustrated in FIG. 2B. An audio input/output unit 20 is connected to a microphone 21 and a speaker 22, and has a function to control input/output of audio. As described above, the handy terminal 10 includes the wireless telephone line communication unit 16, and also includes the microphone 21 and the speaker 22, so that the handy terminal 10 can perform call with other handy terminal, a mobile phone, and a fixed-line phone. In addition, the speaker 22 can also emit sound that alerts a user and warning sound that indicates an operation error when the user operates the handy terminal 10. A non-contact power receiving unit 23 is connected to a non-contact charging coil 24, and has a function to receive power from the network cradle 50 when the handy terminal 10 is mounted on the network cradle 50. A power source unit 25 is a power source of the handy terminal 10, and supplies power to each of the units in the handy terminal 10, which includes the CPU 11 and the like, after receiving supply of power from a battery 26. In addition, the CPU 11 can supply and stop supplying power to a part or all of circuits that constitute the handy terminal 10 by control of the power source unit 25.

A display unit 27 has a function to control display of the display panel 34 illustrated in FIG. 2A. A touch input detection unit 28 has a function to detect a touch input to the display panel 34. A camera module 29 has a function to capture an image by controlling a camera (camera is not illustrated in FIG. 2A, but for example, the camera may be provided in the upper peripheral portion of the display panel 34). A key input unit 30 has a function to accept an input from the input key 35 illustrated in FIG. 2A. The bar code scanner unit 31 has a function to scan a bar code and decipher the content. A flash read-only memory (ROM) 32 has a function to store various pieces of data. The data to be stored may be data that is related to the business operation, or may be a program that is used to control the handy terminal 10. A random-access memory (RAM) 33 is a memory that is used to temporarily store processing data that is generated when calculation processing or the like that is associated with an operation of the handy terminal 10 is executed, and the like.

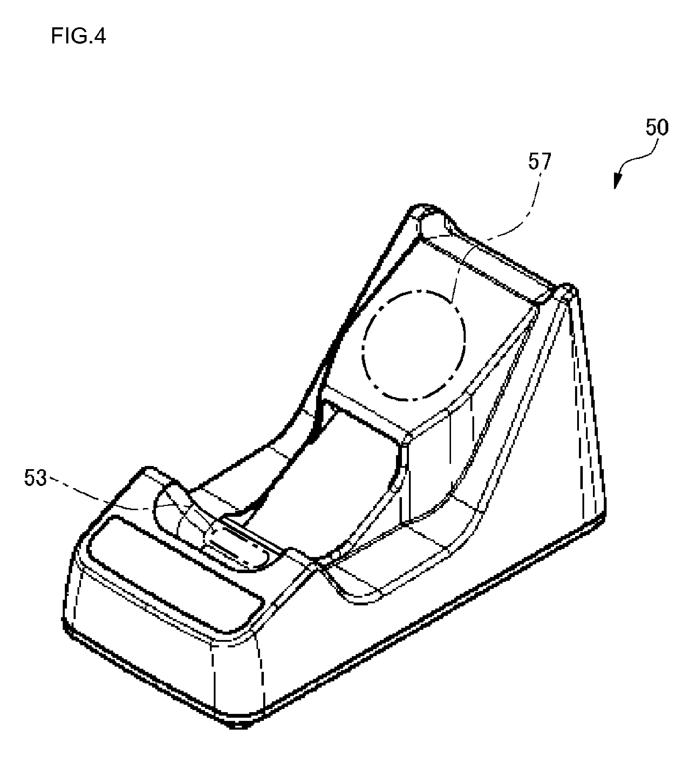

FIG. 4 is a perspective view illustrating an appearance of the network cradle 50. The network cradle 50 has a cradle shape that enables the handy terminal 10 to be mounted slantingly. A non-contact power supply coil 57 and a high-speed proximity non-contact communication coupler 53 are included inside the network cradle 50 in the vicinity of the upper surface of the case. The non-contact power supply coil 57 is provided at a position that is opposite to the non-contact power receiving coil 24 of the handy terminal 10 to be mounted. The high-speed proximity non-contact communication coupler 53 is provided at a position that is opposed to the high-speed proximity non-contact communication coupler board 41 of the handy terminal 10 to be mounted. It is noted that the non-contact power supply coil 57 and the high-speed proximity non-contact communication coupler 53 that are illustrated by the dashed-dotted line are accommodated inside of the case, and not exposed to the outside.

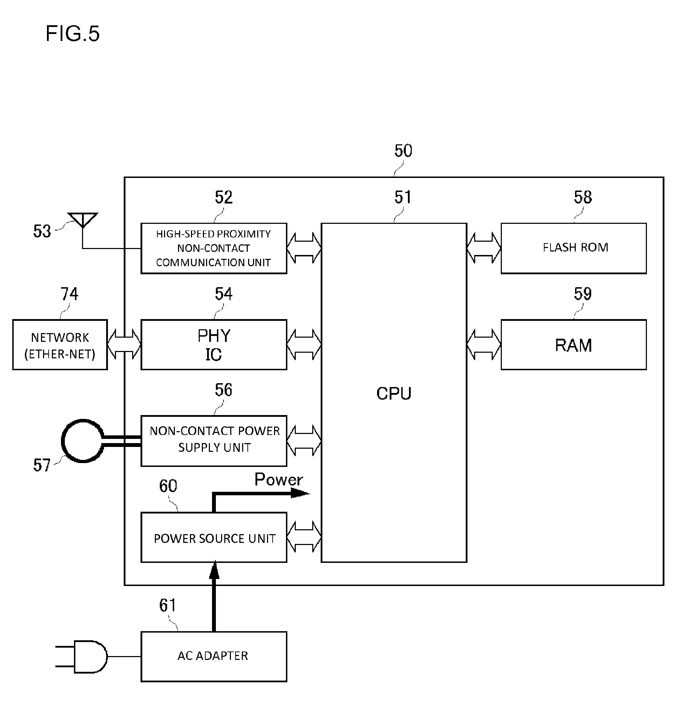

FIG. 5 is a diagram illustrating a configuration of the network cradle 50. The network cradle 50 includes a CPU 51. In addition, to the CPU 51, a high-speed proximity non-contact communication unit 52, a physical layer (PHY) integrated circuit (IC) 54, a non-contact power supply unit 56, a flash ROM 58, an RAM 59, and a power source unit 60 are connected. The high-speed proximity non-contact communication unit 52 is connected to the high-speed proximity non-contact communication coupler 53, and has a function to perform communication with the high-speed proximity non-contact communication unit 18 of the handy terminal 10. The high-speed proximity non-contact communication unit 52 corresponds to "mobile terminal communication unit" according to the present invention. The PHY IC 54 is an interface that is used for connection with the network 74 of the Ethernet. That is, the PHY IC 54 fulfills a function to convert a logical signal into an actual electrical signal in an interface of the Ethernet (R) and the like, and corresponds to "network communication unit" according to the present invention. It is noted that the CPU 51, the flash ROM 58, and the RAM 59 function as control units of the high-speed proximity non-contact communication unit 52, the non-contact power supply unit 56, and the power source unit 60, and also function as Ether controllers.

The non-contact power supply unit 56 is connected to the non-contact power supply coil 57, and has a function to supply power to the handy terminal 10 when the handy terminal 10 is mounted on the network cradle 50. The flash ROM 58 has a function to store various pieces of data. The data to be stored may be a program that is used to control the network cradle 50. The RAM 59 is a memory that is used for the calculation processing or the like that is associated with the operation of the network cradle 50. The power source unit 60 is a power source of the network cradle 50, and supplies power to each of the units in the network cradle 50, which includes the CPU 51 and the like after receiving supply of power from an AC adapter 61. In addition, the CPU 51 can supply and stop supplying power to a part or all of circuits that constitute the network cradle 50 by controlling the power source unit 60.

In the communication system 1 that includes the above-described configuration, processing is described below that is executed when the network cradle 50 connects the handy terminal 10 to the network 74.

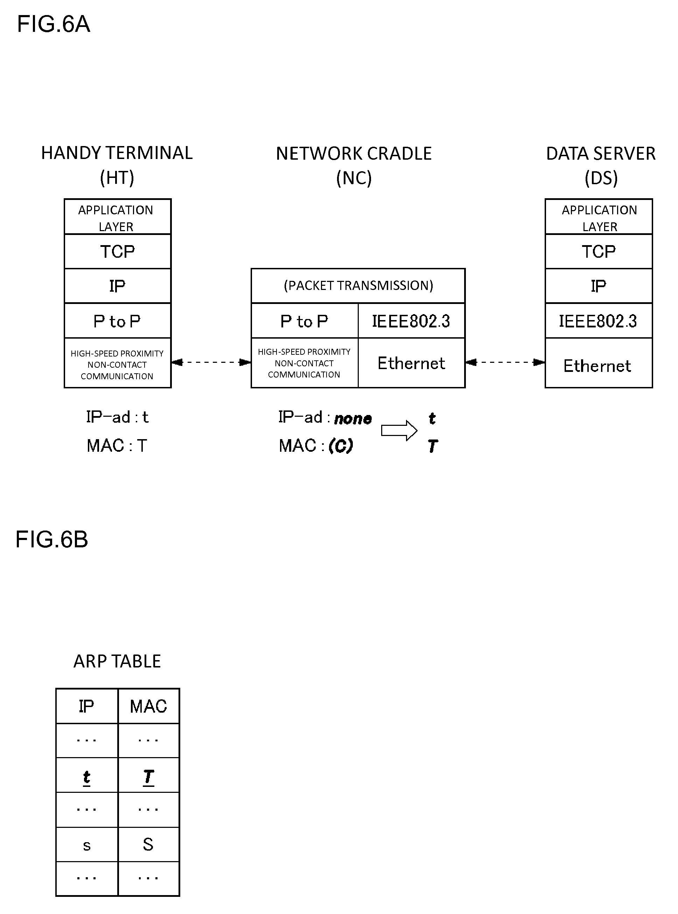

FIG. 6A is a diagram illustrating a protocol stack, an IP address, and a MAC address in the handy terminal 10 and the network cradle 50. As illustrated in FIG. 6A, the handy terminal 10 has a MAC address "T" that has been assigned at the time of shipment of the product, and for example, the MAC address is stored in the flash ROM 32. The network cradle 50 has a MAC address "C", and for example, the MAC address is stored in the flash ROM 58. However, the MAC address "C" is assigned to the network cradle 50 in order to diagnose as the network cradle 50 and obtain certification of standards such as IEEE. As described later, the MAC address "C" is not used in an actual management operation that is described in the embodiment. In addition, the handy terminal 10 has an IP address "t". The IP address may be permanently set when the management in the communication system 1 is started, and may be dynamically set at the time of connection to the network 74. In addition, the IP address "t" is stored, for example, in the flash ROM 32. It is noted that the network cradle 50 does not have an IP address.

When the network cradle 50 connects the handy terminal 10 that has been mounted on the network cradle 50 to the network 74, the network cradle 50 uses not the MAC address "C" of the network cradle 50 but the MAC address "T" of the handy terminal 10 in addition to the IP address "t" of the handy terminal 10. As a result, when the handy terminal 10 is mounted on the network cradle 50, a packet that includes the MAC address "C" that is assigned to the PHY IC 54 of the network cradle 50 is not transmitted to the network 74. In addition, when the handy terminal 10 is not mounted on the network cradle 50, the CPU 51 stops power supply from the power source unit 60 to the PHY IC 54. As a result, even when the handy terminal 10 is not mounted on the network cradle 50, a packet that includes the MAC address "C" that is assigned to the network cradle 50 is not transmitted to the network 74. In addition, the network cradle 50 does not receive the packet that includes the MAC address "C" from other device (for example, the data server 73 in FIG. 1) on the network 74. That is, regardless whether or not the handy terminal 10 is mounted on the network cradle 50, the network cradle 50 itself is not recognized by the other device on the network 74.

Conventionally, when a communication adapter connects a terminal to the network 74, and a packet from the terminal is transmitted to the network 74, a MAC address of the communication adapter itself has been set as a MAC address of a transmission source. On the other hand, when the network cradle 50 according to the embodiment connects the handy terminal 10 to the network 74, and a packet from the network cradle 50 is transmitted to the network 74, the MAC address "T" of the handy terminal 10 is used as a MAC address of a transmission source, instead of the MAC address "C" of the network cradle 50 itself. Such a method is described below.

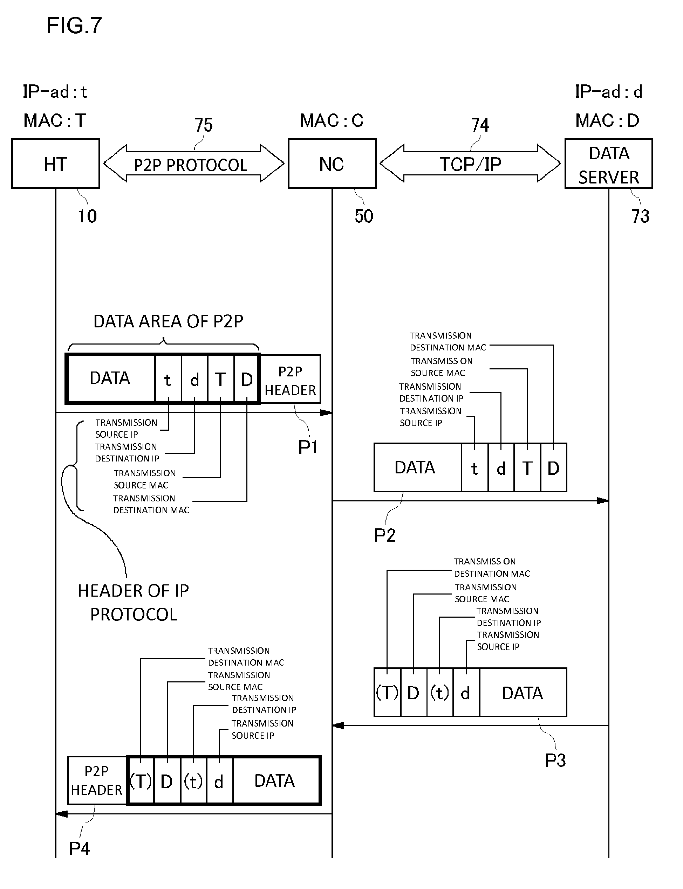

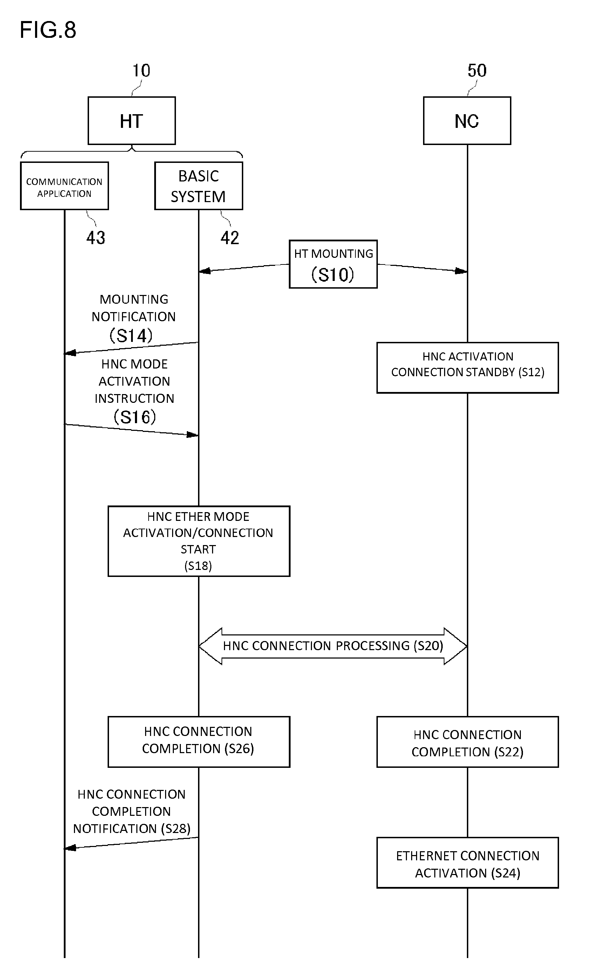

FIG. 7 is a diagram illustrating a data format of a packet that is transmitted and received between the handy terminal 10 and the data server 73 in the embodiment. In FIG. 7, a handy terminal is referred to as "HT", and a network cradle is referred to as "NC" (this is applied to FIG. 8 and subsequent drawings). In FIG. 7, each data format is described so that a traveling direction corresponds to the head of the data. That is, in data that is transmitted from the handy terminal 10 to the data server 73, the right side corresponds to the head of the data, and in data that is transmitted from the data server 73 to the handy terminal 10, the left side corresponds to the head of the data.

In FIG. 7, "data" is data that is to be transmitted and received between the handy terminal 10 and the data server 73. When the handy terminal 10 transmits data to the data server 73, first, the handy terminal 10 generates a packet that includes the data as-is and transmits the data to the network cradle 50, or the network cradle 50 divides the data, generates a plurality of packets that includes the divided pieces of data, and transmits the plurality of packets to the network cradle 50. The data format of the packet that is transmitted and received at that time is constituted by a header area of the P2P protocol and a data area of the P2P protocol. It is noted that, in this example, only the header area and the data area are illustrated, but a checksum and the like may follow the data area.

The handy terminal 10 adds data to be transmitted and the header of the IP protocol to the data area of the P2P of a packet P1 that is transmitted to the network cradle 50. Here, as the header of the IP protocol, a MAC address "D" of the transmission destination, a MAC address "T" of the transmission source, an IP address "d" of the transmission destination, and an IP address "t" of the transmission source are included. The header of the IP protocol that is added here corresponds to "first header" according to the present invention. It is noted that, in FIG. 7, for convenience of description, information on the transmission destination and information on the transmission source are merely illustrated, but information on the type of data, information on the data length, and the like can be also included in the header of the IP protocol in the data area of the P2P. The handy terminal 10 adds the header of the P2P to the header area of the P2P of the data that is transmitted to the network cradle 50. The header of the P2P that is added here corresponds to "second header" according to the present invention. The handy terminal 10 transmits the above-described packet P1 to the network cradle 50.

When the network cradle 50 receives the packet P1 that has been transmitted from the handy terminal 10, the network cradle 50 removes the header of the P2P from the received packet P1, and transmits a packet P2 that is constituted by a portion of the data area of the P2P, to the data server 73 through the network 74. As described above, the header of the IP protocol has already been included in the data area of the P2P, so that the network cradle 50 can transmit the content of the received packet P1 from the handy terminal 10 (that is, data to be transmitted), to the network 74 by merely removing the P2P header from the received packet P1 without processing of new addition of a header.

In addition, in the header that is transmitted as described above, not the MAC address "C" that is assigned to the network cradle 50 that has actually performed transmission but the MAC address "T" of the handy terminal 10 is included, as the transmission source MAC address. When the handy terminal 10 is being mounted on the network cradle 50 as described above, a packet that includes the MAC address "C" that has been assigned to the network cradle 50 is not transmitted to the network 74, so that the network cradle 50 itself is not recognized by the other device on the network 74.

In addition, when the handy terminal 10 is not being mounted on the network cradle 50, the CPU 51 stops power supply from the power source unit 60 to the PHY IC 54. As a result, even when the handy terminal 10 is not being mounted on the network cradle 50, the packet that includes the MAC address "C" that has been assigned to the network cradle 50 is not transmitted to the network 74. In addition, the network cradle 50 does not receive the packet that includes the MAC address "C" from the other device on the network 74 (for example, the data server 73 in FIG. 1). That is, the network cradle 50 itself is not recognized by the other device on the network 74 regardless whether or not the handy terminal 10 is being mounted on the network cradle 50.

A case is described below in which data that has been transmitted from the data server 73 is received by the handy terminal 10. When the network cradle 50 receives a packet P3 that includes a part or all of pieces of data to be received from the data server 73 and the header of the IP protocol, the network cradle 50 transfers a packet P4 that is obtained by adding the header of the P2P to the received packet P3, to the handy terminal 10 that is mounted on the network cradle 50. The header of the P2P that is added here corresponds to "second header" according to the present invention. Here, the network cradle 50 transfers the received data to the handy terminal 10, regardless whether or not an IP address and a MAC address of the transmission destination, which are added to the received packet, correspond to the handy terminal 10. In order to illustrate this, parentheses are applied as illustrated in an IP address "(t)" and a MAC address "(T)" of the transmission destination in FIG. 7. When the handy terminal 10 receives the transferred data from the network cradle 50, the handy terminal 10 determines whether or not the MAC address and the IP address of the transmission destination are destined for the handy terminal, and the handy terminal 10 receives the data when the MAC address and the IP address are destined for the handy terminal. Hereinafter, an operation mode of the packet processing that is executed by the network cradle 50 as described above is referred to as "packet transfer mode".

In this regard, when firmware that is built in the flash ROM 58 of the network cradle 50 (see FIG. 5) is updated, first, the handy terminal 10 receives the update data that is transmitted from the data server 73 through "packet transfer mode" of the network cradle 50 by the above-described procedure. After that, the handy terminal 10 transmits the update data that has received from the data server 73 to the network cradle 50 according to the P2P protocol. At that time, in the data area of the P2P, the update data is included, but the header of an IP protocol is not included.

FIG. 6B is a diagram illustrating an example of the ARP table 72 that is included in the router 71. The handy terminal 10 corresponds to the MAC address "T" and the IP address "t", so that the combination of the MAC address "T" and the IP address "t" is stored in the ARP table 72. As described above, the network cradle 50 transmits a packet that includes, as the header, the MAC address "T" of the handy terminal 10 as the transmission source MAC address and the IP address "t" of the handy terminal 10 as the transmission source IP address, to the network 74, so that the combination of the MAC address "T" and the IP address "t" is not changed.

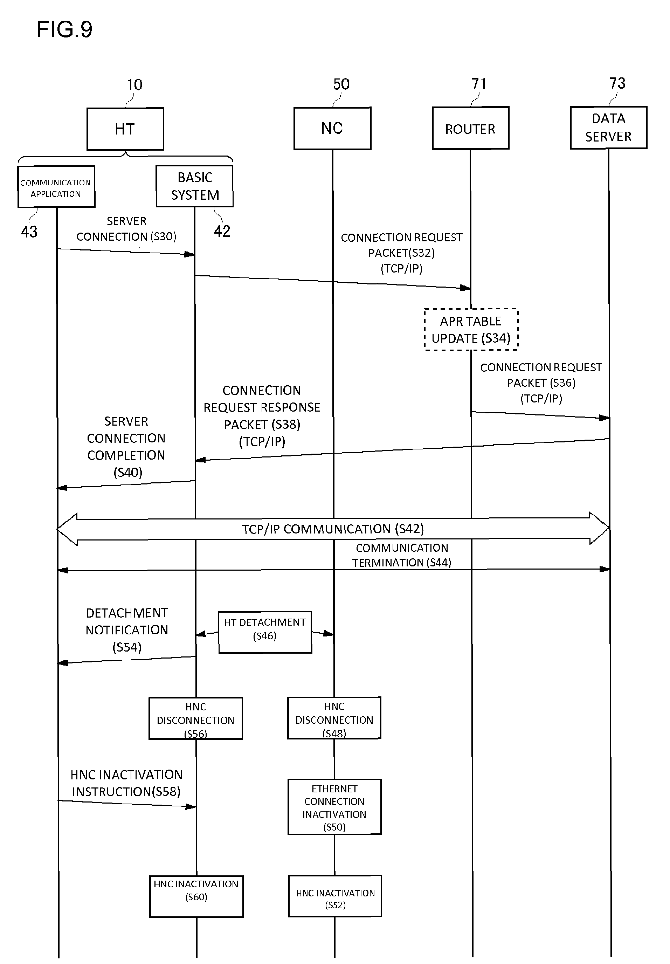

FIGS. 8 and 9 are diagrams illustrating the outline of an operation of the communication system 1 according to the embodiment. FIG. 8 illustrates an operation until connection between the network cradle 50 and the handy terminal 10 is established, and FIG. 9 illustrates an operation until communication between the handy terminal 10 and a server is terminated after the communication has been performed. It is noted that, in FIG. 8, high-speed proximity non-contact communication is referred to as "HNC".

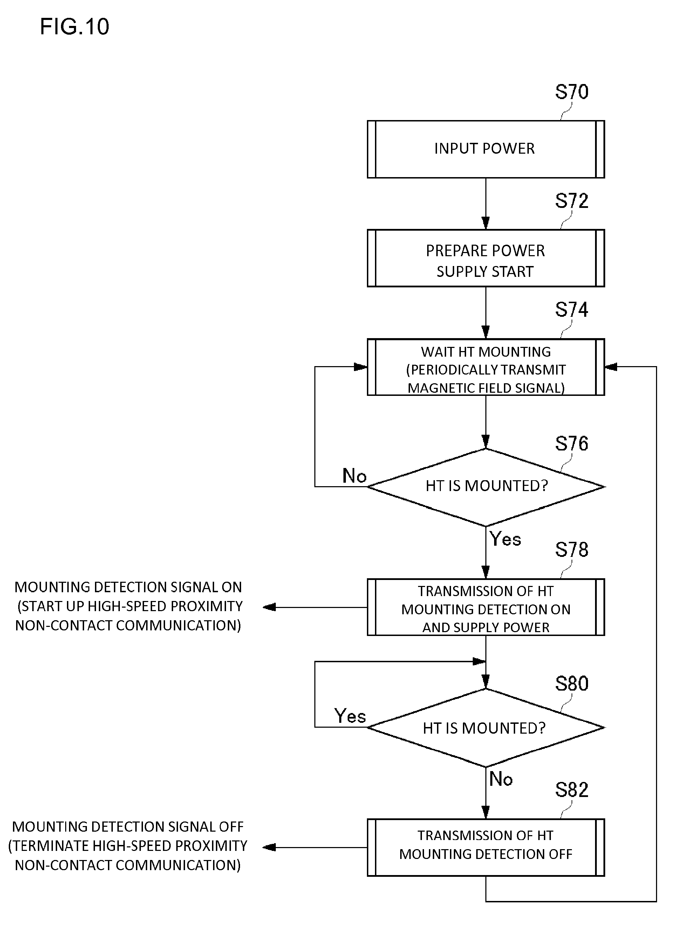

When the handy terminal 10 is mounted on the network cradle 50 (S10), each of the network cradle 50 and the handy terminal 10 detects that the handy terminal 10 has been mounted on the network cradle 50 (method of detecting whether or not the handy terminal 10 is being mounted on the network cradle 50 is described later with reference to FIG. 10). The network cradle 50 performs activation of high-speed proximity non-contact communication, and becomes in a state of connection standby (S12). For example, in FIG. 5, the activation of the high-speed proximity non-contact communication may be performed when the CPU 51 controls the power source unit 60 to start power supply from the power source unit 60 to the high-speed proximity non-contact communication unit 52. In this case, when the handy terminal 10 is not being mounted on the network cradle 50, the handy terminal 10 is in a state in which power supply to the high-speed proximity non-contact communication unit 52 is stopped. When a basic system 42 detects that the handy terminal 10 is mounted on the network cradle 50, the handy terminal 10 transmits a mounting notification to a communication application 43 (S14). In response to the notification, the communication application 43 transmits, to the basic system 42, an activation instruction of an Ether mode in the high-speed proximity non-contact communication unit 52 (S16).

The basic system 42 activates an Ethernet connection mode (HNC Ether mode) through the high-speed non-contact communication, and executes processing of connection start (S18). As a result, connection processing of the high-speed proximity non-contact communication is executed between the network cradle 50 and the handy terminal 10, and connection of the high-speed non-contact communication is established (S20). The network cradle 50 executes connection completion processing of the high-speed proximity non-contact communication (S22), and performs activation of the Ethernet (S24). At that time, the PHY IC 54 of the network cradle 50 is activated by a means that starts power supply from the power source unit 60 to the high-speed proximity non-contact communication unit 52 when the CPU 51 controls the power source unit 60, or the like. At the same time, the CPU 51 executes processing of setting "packet transfer mode" that is described in FIG. 7 to the network cradle 50 itself. The handy terminal 10 executes connection completion processing of the high-speed proximity non-contact communication (S26), and notifies the communication application 43 of connection completion of the high-speed proximity non-contact communication (S28).

After that, description is made below with reference to FIG. 9. The communication application 43 of the handy terminal 10 executes an instruction of server connection, to the basic system 42 (S30). The basic system 42 of the handy terminal 10 transmits a connection request packet of the TCP/IP to the router 71 through the network cradle 50 (S32). When the router 71 receives the connection request packet, the router 71 updates the ARP table 72 only when connection of the handy terminal 10 is performed for the first time (S34, here, dotted line frame is illustrated to clearly indicate that there is a procedure that is necessary only for the first-time connection). As described above, similar to the format of the transmission packet P2 illustrated in FIG. 7, in the connection request packet that is transmitted through the network cradle 50, the MAC address ("T") of the handy terminal 10 and the IP address ("t") of the handy terminal 10 are included as the transmission source. Thus, the router 71 stores the combination of the MAC address and the IP address of the handy terminal 10 in the ARP table 72.

When the router 71 receives the connection request packet, the router 71 transfers the received connection request packet to the data server 73 (S36). As illustrated in FIG. 6B, a MAC address ("S") and an IP address ("s") of the data server 73 that is being connected to the network 74 have been already registered to the ARP table 72 (see FIG. 1). The data server 73 transmits a connection request response packet to the handy terminal 10 (S38). The connection request response packet is transmitted to the basic system 42 of the handy terminal 10 through the router 71 and the network cradle 50. When the basic system 42 of the handy terminal 10 receives the connection request response packet, the basic system 42 notifies the communication application 43 of server connection completion (S40). By the above-described operation, TCP/IP communication between the handy terminal 10 and the data server 73 is established (S42).

After that, the communication between the handy terminal 10 and the data server 73 is terminated (S44), and the handy terminal 10 is detached from the network cradle 50 (S46), each of the network cradle 50 and the handy terminal 10 detects that the handy terminal 10 is detached from the network cradle 50 (method of detecting whether or not the handy terminal 10 is detached from the network cradle 50 is similar to the method of detecting whether or not the handy terminal 10 is mounted on the network cradle 50, and is described later with reference to FIG. 10). When the network cradle 50 detects that the handy terminal 10 is detached from the network cradle 50, the network cradle 50 executes disconnection processing of the high-speed non-contact communication (HNC) (S48), executes inactivation processing of the Ethernet connection (S50), and executes inactivation processing of the high-speed proximity non-contact communication to complete the processing (S52). The network cradle 50 waits until a next handy terminal 10 is mounted to the network cradle 50.

It is noted that, as described above, the inactivation processing of the Ethernet connection (S50) may be executed when the CPU 51 illustrated in FIG. 5 stops power supply from the power source unit 60 to the PHY IC 54. In that case, when the handy terminal 10 is not being mounted on the network cradle 50, a packet that includes the MAC address "C" of the network cradle 50 is not transmitted to the network 74. In addition, the network cradle 50 does not receive the packet that includes the MAC address "C" from the other device on the network 74 (for example, the data server 73 in FIG. 1). That is, regardless whether or not the handy terminal 10 is being mounted on the network cradle 50, the network cradle 50 itself is not recognized by the other device on the network 74.

In addition, the inactivation processing of the high-speed proximity non-contact communication (S52) may be also executed when the CPU 51 illustrated in FIG. 5 stops power supply from the power source unit 60 to the high-speed proximity non-contact communication unit 52. As described above, when the network cradle 50 is in a standby state, that is, when the handy terminal 10 is not being mounted on the network cradle 50, power consumption of the whole network cradle 50 can be suppressed by stopping power supply to a part of the circuits that constitute the network cradle 50. In this regard, "part of the circuits" indicate the communication circuit with the handy terminal 10 that is mounted on the network cradle 50 or the communication circuit with the network 74 such as the high-speed proximity non-contact communication unit 52 or the PHY IC 54 illustrated in FIG. 5. This is why these communication circuits do without communication with other device or a network at the time of standby of the network cradle 50.

When the basic system 42 of the handy terminal 10 detects that the handy terminal 10 is detached from the network cradle 50, the basic system 42 notifies the communication application 43 of detachment of the handy terminal 10 (S54), and executes disconnection processing of the high-speed non-contact communication (HNC) (S56). When the communication application 43 of the handy terminal 10 receives detachment notification from the basic system 42, the communication application 43 executes an inactivation instruction of the high-speed proximity non-contact communication to the basic system 42 (S58), and the basic system 42 executes inactivation of the high-speed proximity non-contact communication (S60). The inactivation processing of the high-speed proximity non-contact communication (S60) may be executed when the CPU 11 of the handy terminal 10 illustrated in FIG. 3 stops power supply from the power source unit 25 to the high-speed proximity non-contact communication unit 18. As a result, when the handy terminal 10 is not mounted on the network cradle 50, power consumption of the handy terminal 10 can be suppressed.

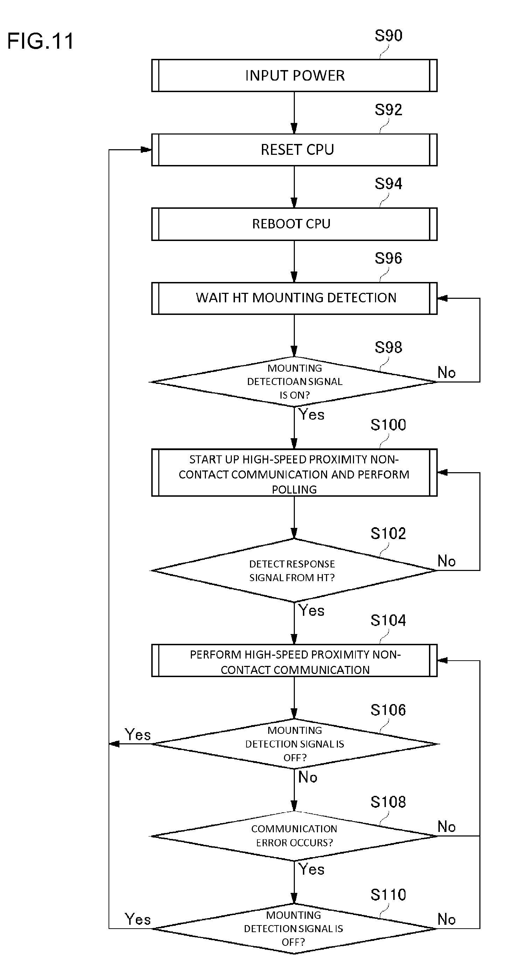

An operation of the network cradle 50 in the above-described processing of the communication system 1 is described in detail below with reference to FIGS. 10 and 11 in addition to FIGS. 5, 8, and 9 illustrated above. FIG. 10 is a diagram illustrating an operation of the non-contact power supply unit 56 of the network cradle 50, and FIG. 11 is a diagram illustrating an operation of the high-speed proximity non-contact communication unit 52 of the network cradle 50.

First, the operation of the non-contact power supply unit 56 is described. As illustrated in FIG. 10, when power is input to the non-contact power supply unit 56 (S70), the non-contact power supply unit 56 prepares power supply start (S72), and waits until the handy terminal 10 is mounted on the network cradle 50 (S74 and S76).

Determination whether or not the handy terminal 10 is mounted on the network cradle 50 is performed as described below. The network cradle 50 illustrated in FIG. 5 periodically transmits a magnetic field signal to the non-contact power supply unit 56, and transmits a response magnetic field signal that responds to a magnetic field signal from the non-contact power receiving unit 23 to the non-contact power supply unit 56 of the network cradle 50 when the handy terminal 10 receives the magnetic field signal at the non-contact power receiving unit 23 (see FIG. 3). When the network cradle 50 receives the response magnetic field signal that is transmitted from the handy terminal 10 by the non-contact power supply unit 56, the network cradle 50 determines that the handy terminal 10 is mounted on the network cradle 50. It is noted that the above-described Steps S74 and S76 correspond to "HT mounting" (S10) in FIG. 8.

In FIG. 10, when it is determined that the handy terminal 10 is mounted on the network cradle 50 (YES in S76), the non-contact power supply unit 56 illustrated in FIG. 5 starts power supply to the handy terminal 10. In addition, the non-contact power supply unit 56 transmits a mounting detection signal ON (see FIG. 10) that indicates the handy terminal 10 has been mounted on the network cradle 50, to the CPU 51 (S78). It is noted that Step S78 corresponds to "HNC activation/connection standby" (S12) in FIG. 8. As a result, the high-speed proximity non-contact communication unit 52 is started up by the CPU 51. After that, the non-contact power supply unit 56 detects whether or not the handy terminal 10 is mounted on the network cradle 50 by the above-described method of using a magnetic field signal in the non-contact power supply unit 56 (S80), and transmits a handy terminal mounting detection OFF signal to the CPU 51 (S82) when the non-contact power supply unit 56 detects that the handy terminal 10 is not mounted on the network cradle 50 (NO in S80). As a result, the transmission and reception through the high-speed proximity non-contact communication unit 52 is terminated by the CPU 51. It is noted that Steps S80 and S82 respectively correspond to "HT detachment" (S46) and "HNC disconnection" (S48) in FIG. 9.

The operation of the high-speed proximity non-contact communication unit 52 is described below. As illustrated in FIG. 11, when power is input to the high-speed proximity non-contact communication unit 52 illustrated in FIG. 5 (S90), the high-speed proximity non-contact communication unit 52 waits until the handy terminal 10 is mounted on the network cradle 50 (S96) after reset (S92) and reboot (S94) is performed by the CPU 51. When the CPU 51 receives a mounting detection signal ON that is output in Step S78 of FIG. 10, from the non-contact power supply unit 56 (S98), the high-speed proximity non-contact communication unit 52 starts up the high-speed proximity non-contact communication and performs polling in response to the instruction from the CPU 51 (S100). When it is detected that a response signal for the polling is received from the handy terminal 10 (S102), the high-speed proximity non-contact communication is performed (S104). It is noted that the above-described Steps S96 and S98 correspond to "HT mounting" (S10) in FIG. 8. In addition, the above-described Steps S100 and S102 correspond to "HNC activation/connection standby" (S12), "HNC connection processing" (S20), and "HNC connection completion" (S22) in FIG. 8.

After that, when the CPU 51 receives a mounting detection signal OFF that is output in Step S82 of FIG. 10, from the non-contact power supply unit 56 (YES in S106), the high-speed proximity non-contact communication unit 52 waits until the handy terminal 10 is mounted on the network cradle 50 again (S96) after reset (S92) and reboot (S94) by the CPU 51 are performed. When the mounting detection signal OFF is not received (NO in S106), the high-speed proximity non-contact communication unit 52 determines whether or not there is a communication error (S108).

When there is no communication error (NO in S108), the high-speed proximity non-contact communication unit 52 continues the high-speed proximity non-contact communication (S104). When there is a communication error (YES in S108), the high-speed proximity non-contact communication unit 52 determines whether or not the mounting detection signal OFF is received (S110). When the mounting detection signal OFF is received (YES in S110), the high-speed proximity non-contact communication unit 52 waits until the handy terminal 10 is mounted on the network cradle 50 (S96) after reset (S92) and reboot (S94) by the CPU 51 are performed. When the mounting detection signal OFF is not received (NO in S110), the high-speed proximity non-contact communication unit 52 waits until the mounting detection signal OFF is received (S106). As described above, the high-speed proximity non-contact communication unit 52 controls start/end of the high-speed proximity non-contact communication in conjunction with the ON/OFF of handy terminal mounting detection in the non-contact power supply unit 56.

As described above, in the embodiment, determination whether or not the handy terminal 10 is mounted on the network cradle 50, and determination whether or not the handy terminal 10 and the network cradle 50 are in a state in which communication can be performed with each other are performed by a so-called twofold. That is, the first determination is determination whether or not the handy terminal 10 is being mounted on the network cradle 50, or whether or not the handy terminal 10 is replaced with other device. The first determination is performed when a magnetic field response signal that is transmitted from the handy terminal 10 (see FIG. 3) is detected by the non-contact power supply unit 56 ("HT mounting" (S10) in FIG. 8, YES in Step S76 of FIG. 10, Step S78, and Steps S96 and S98 in FIG. 11). The magnetic field response signal is transmitted from the non-contact power receiving unit 23 of the handy terminal 10 (see FIG. 3), and is detected by the non-contact power supply unit 56 of the network cradle 50. In addition, the magnetic field response signal is transmitted as a result of the detection of a periodical magnetic field signal (Step S74 and S76 of FIG. 10) that is transmitted from the network cradle 50 (see FIG. 5), by the handy terminal 10. The periodical magnetic field signal from the network cradle 50 is transmitted from the non-contact power supply unit 56 of the network cradle 50 (see FIG. 5), and detected by the non-contact power receiving unit 23 of the handy terminal 10.

The second determination is determination whether or not the handy terminal 10 and the network cradle 50 are in a state in which communication can be performed with each other. The second determination is performed when a response signal from the handy terminal 10 (see FIG. 3) is detected by the network cradle 50 ("HNC connection processing" (S20) and "HNC connection completion" (S22) in FIG. 8, and YES in Step S102 of FIG. 11). The response signal is transmitted from the high-speed proximity non-contact communication unit 18 of the handy terminal 10 (see FIG. 3), and detected by the high-speed proximity non-contact communication unit 52 of the network cradle 50 (see FIG. 5). In addition, the response signal is transmitted as a result of the detection of start-up polling ("HNC activation/connection standby" (S12) in FIG. 8, and Steps S100 and S102 of FIG. 11) that is transmitted from the network cradle 50, by the handy terminal 10. The start-up polling from the network cradle 50 is transmitted from the high-speed proximity non-contact communication unit 52 of the network cradle 50 and detected by the high-speed proximity non-contact communication unit 18 of the handy terminal 10.

As a result of the determination by twofold, it is determined that the handy terminal 10 is connected to the network cradle 50 correctly, the handy terminal 10 and the network cradle 50 are in a state in which communication can be performed with each other. In addition, a communication quality of the high-speed proximity non-contact communication that is performed between the handy terminal 10 and the network cradle 50 is ensured.

The reason why such determination by twofold is performed is as follows. The high-speed proximity non-contact communication between the handy terminal 10 and the network cradle 50 is performed at high speed, but is effective only at a very short distance of about 1 cm. In addition, the transfer speed is greatly affected by a distance between the handy terminal 10 and the network cradle 50. Thus, it is desirable that a distance between the high-speed proximity non-contact communication unit 18 of the handy terminal 10 (see FIG. 3) and the high-speed proximity non-contact communication unit 52 of the network cradle 50 (see FIG. 5) be close to a distance that has been set beforehand as much as possible. On the other hand, in effectiveness of the non-contact power supply from the network cradle 50 to the handy terminal 10, dependence for a distance between the two devices is low as compared with the high-speed proximity non-contact communication in the embodiment. The effect of power supply is reduced, but the network cradle 50 can perform non-contact power supply on the handy terminal 10 as long as a gap from the original relative position is within a few centimeters. That is, this means that a periodical magnetic field signal from the non-contact power supply unit 56 of the network cradle 50 (see FIG. 5) and a magnetic field response signal from the non-contact power receiving unit 23 of the handy terminal 10 (see FIG. 3) for the periodical magnetic field signal can be transmitted and received between the handy terminal 10 and the network cradle 50.

If the connection between the network cradle 50 and the handy terminal 10 is checked only by the second determination whether or not the high-speed proximity non-contact communication can be performed without the first determination by the both non-contact power supply units, for example, it becomes vulnerable to temporary interruption of communication due to vibration or the like. A processing flow in this case is, for example, as follows. That is, first, the processing flow corresponds to a state in which there is no flow of mounting detection of the handy terminal 10 by the non-contact power supply unit 56 of the network cradle 50, which is illustrated in FIG. 10. In addition, the flow corresponds to a state in which Steps S96, S98, S106, and S110 are deleted and passed through in the flow of communication processing by the high-speed proximity non-contact communication unit 52 of the network cradle 50, which is illustrated in FIG. 11. It is assumed that, in the above-described processing flow, for example, in the middle of execution of the TCP/IP communication (S104 of FIG. 11 and S42 of FIG. 9) between the network cradle 50 and the handy terminal 10 after the beginning of the communication, the communication is temporarily interrupted due to vibration or the like. At that time, the high-speed proximity non-contact communication unit 52 of the network cradle 50 detects a communication error (YES in Step S108 of the flow in which the above-described deletion is performed from FIG. 11), the flow returns to Step S92 and is reset. Therefore, in the network cradle 50 and the handy terminal 10, the flow is needed to start from the operation until the connection between the network cradle 50 and the handy terminal 10 is established as illustrated in FIG. 8 again. In addition, transmission and reception of all pieces of data that includes the data the transmission and reception of which has been completed until that time are needed to be performed again from the beginning.

As a countermeasure for the problem, in the conventional method, so-called timer processing is added to detection of a communication error (Step S108 of the flow in which the above-described deletion is performed from FIG. 11) in the processing flow only by the above-described second determination. That is, it is determined that the handy terminal 10 is detached from the NC 50 in case that a communication error is detected on or past the predetermined time. In other case, it is determined that the communication between the handy terminal 10 and NC 50 has been temporarily interrupted.

However, conventionally, there is a problem of lack of certainty in the determination method by such timer processing. For example, even when the handy terminal 10 that is mounted on the network cradle 50 is replaced with other device within the time that has been set beforehand, the partner of the communication (for example, the data server 73 in FIG. 1 and FIG. 9) and the network cradle 50 incorrectly recognize that communication with the same device as before is continued. Thus, the communication partner tries to perform transmission and reception of the rest of the communication data that has been previously processed. In addition, the network cradle 50 also tries to deliver the rest of the communication data to the other device that is replaced with the handy terminal 10 and mounted on the network cradle 50. However, the other device that is replaced with the handy terminal 10 and mounted on the network cradle 50 has no relation to the rest of the communication data, so that the communication with the partner becomes an error, and disconnection is performed. Therefore, a developer of the system needs to design some countermeasure to recover the system in such a case and the countermeasure needs to be embedded within the network cradle 50. In addition, even when the countermeasure of the recovery is provided to the system, it takes a long time to recover the communication with the partner, which is performed through the handy terminal 10 and the network cradle 50 on which the handy terminal 10 is mounted. As a result, immediate communication of data from the handy terminal 10 is not performed.

On the other hand, as long as the determination by twofold in the embodiment is performed, the possibility is reduced that mismatch of recognition in such a communicating partner occurs. That is, determination whether or not the handy terminal 10 has been mounted on the network cradle 50, and determination whether or not the handy terminal 10 is replaced with other device is performed by the above-described first determination that is performed between the non-contact power supply unit 56 of the network cradle 50 (see FIG. 5) and the non-contact power receiving unit 23 of the handy terminal 10 (see FIG. 3). If the handy terminal 10 that is mounted on the network cradle 50 is replaced with other device, not only the high-speed proximity non-contact communication, but also the non-contact power supply/power reception is stopped. On the other hand, when temporary interruption of the high-speed proximity non-contact communication due to vibration or the like occurs, the non-contact power supply/power reception is rarely interrupted. Thus, determination whether or not the handy terminal 10 is being mounted on the network cradle 50, or determination whether or not the handy terminal 10 is replaced with the other device are performed further reliably by using the communication in the non-contact power supply/power reception in which a communication distance is longer than the high-speed proximity non-contact communication, for the first determination. As described in the above-described conventional timer processing, an uncertain element is eliminated.

In this regard, after the network cradle 50 detects the response signal, and becomes in the state in which communication with the handy terminal 10 can be performed, the network cradle 50 activates the communication on the network (Ethernet (R)) 74 (Step S24 of FIG. 8, Ethernet (R) connection activation). The activation of the communication on the network (Ethernet (R)) 74 may be performed by start of power supply from the power source unit 60 to the PHY IC 54.

In addition, by the Ethernet (R) connection activation, the CPU 51 of the network cradle 50 illustrated in FIG. 5 executes the processing in the packet transfer mode illustrated in FIG. 7 when the CPU 51 causes the handy terminal 10 and a device on the network 74 to communicate each other through the high-speed proximity non-contact communication unit 52. That is, in the packet that is received from the handy terminal 10 through the high-speed proximity non-contact communication unit 52, a portion such as the P2P header that is required in the communication channel 75 that uses the P2P protocol is eliminated, and the P2P data portion is transmitted to the network 74 as is. In addition, in the packet that is received from the network 74, the packet data is transferred to the handy terminal 10 through the high-speed proximity non-contact communication unit 52. At that time, the CPU 51 of the network cradle 50 illustrated in FIG. 5 performs addition of the P2P header and the like that are required in the communication channel 75 that uses the P2P protocol. As a result, the handy terminal 10 that is mounted on the network cradle 50 can perform communication with the device on the network (Ethernet (R)) 74 (for example, the data server 73 in FIG. 1) through the network cradle 50. In addition, here, when the plurality of handy terminals 10 and the plurality of network cradles 50 that are registered to the ARP table 72 of the system 1 according to the embodiment (see FIG. 1) beforehand are provided, even in any combination between the handy terminal 10 and the network cradle 50 and communication between the handy terminal 10 and the device on the network 74 can be started immediately without rewriting the ARP table 72. When the handy terminal 10 is mounted on (connected to) the network cradle 50, the network cradle 50 uses the MAC address "T" and the IP address "t" that the handy terminal 10 has. In addition, when the handy terminal 10 is not mounted on (connected to) the network cradle 50, the network cradle 50 causes a communication function on the network 74 to be inactivated so that the communication with the device on the network 74 cannot be performed. Thus, the existence of the network cradle 50 is not recognized by the device on the network 74 in any case. That is, it is seemed that the network cradle 50 does not exist on the network 74. A problem does not occur that the network cradle 50 assigns the same MAC address or the same IP address to the different handy terminals 10.

On the contrary, even in a case in which the handy terminal 10 is detached from the network cradle 50 ("HT detachment (S46)" in FIG. 9), the determination is performed by the above-described first determination, first. The first determination corresponds to determination whether the handy terminal 10 is being mounted on the network cradle 50, or determination whether the handy terminal 10 is replaced with other device. The determination corresponds to Step S80 in the processing flow of the non-contact power supply unit 56 of the network cradle 50, which is illustrated in FIG. 10, and corresponds to Steps S106 and S110 in the processing flow of the high-speed proximity non-contact communication unit 52 of the network cradle 50, which is illustrated in FIG. 11. In addition, between Steps S106 and S110, the above-described second determination is performed. The second determination corresponds to determination whether or not the handy terminal 10 and the network cradle 50 are in a state in which communication can be performed with each other. By the configuration of such a processing flow, the network cradle 50 accurately determines whether the above-described high-speed proximity non-contact communication with the HT 10 is temporarily interrupted due to vibration or the like, or the handy terminal 10 that is mounted on the network cradle 50 is replaced with other device.

When the high-speed proximity non-contact communication with the HT 10 is temporarily interrupted due to vibration or the like, in Step S106 of FIG. 11, a mounting detection signal from the non-contact power supply unit 56 is not turned OFF. Therefore, the flow proceeds to Step S108, and proceeds to the determination whether or not a communication error occurs. Even when a communication error is detected here, and the flow proceeds to Step S110, the mounting detection signal from the non-contact power supply unit 56 is still not turned OFF as long as the high-speed proximity non-contact communication is temporarily interrupted due to vibration or the like. Thus, in the high-speed proximity non-contact communication unit 52, the flow returns to Step S104, and the high-speed proximity non-contact communication with the handy terminal 10 is continued.

In addition, when the HT 10 that has been mounted on the network cradle 50 is detached from the network cradle 50 in order that the HT 10 is replaced with other device, the mounting detection signal from the non-contact power supply unit 56 is turned OFF regardless whether or not a communication error is detected. Thus, in Step S106 or S110 of the processing flow of the high-speed proximity non-contact communication unit 52 of the network cradle 50 which is illustrated in FIG. 11, the non-contact power supply unit 56 is reset (Step S92), and rebooted (Step S94). As described above, the network cradle 50 cancels the communication of the HT 10 that has been previously mounted on the network cradle 50, and proceeds to a state in which the network cradle 50 can accept mounting of a new device.

As described above, by the processing flow of the network cradle 50 illustrated in FIGS. 10 and 11, determination whether or not the handy terminal 10 is being mounted on the network cradle 50, and determination whether or not the handy terminal 10 is replaced with other device are performed further reliably.

At that time, the network cradle 50 inactivates the high-speed proximity non-contact communication unit 52 (see FIG. 5) (Step S52 in FIG. 9) after inactivation of connection to the network 74 (Step S50 of FIG. 9, "Ethernet (R) connection inactivation"). As described above, the inactivation of connection to the network 74 is achieved by terminating the operation of the PHY IC 54 using a means that stops power supply from the power source unit 60 (see FIG. 5) to the PHY IC 54 (see FIG. 5), or the like. If the inactivation of the high-speed proximity non-contact communication unit 52 is performed prior to the inactivation of connection to the network 74, it is possible that the CPU 51 of the network cradle 50 releases setting of "packet transfer mode" of the network cradle 50 itself. Therefore, it is possible that a packet that includes the MAC address "C" that is not to be seen originally is transmitted to the network 74 because the operation of the PHY IC 54 is not terminated. In order to prevent this, after the inactivation of connection to the network 74 (Step S50 of FIG. 9, "Ethernet (R) connection inactivation"), the CPU 51 of the network cradle 50 inactivates the high-speed proximity non-contact communication unit 52 (see FIG. 5) (Step S52 of FIG. 9). Therefore, the HT 10 is not recognized by the communicating partner on the network 74. Here, the network cradle 50 itself is always in a state of being not recognized by the communicating partner on the network 74 regardless whether or not the HT 10 is mounted on the network cradle 50.

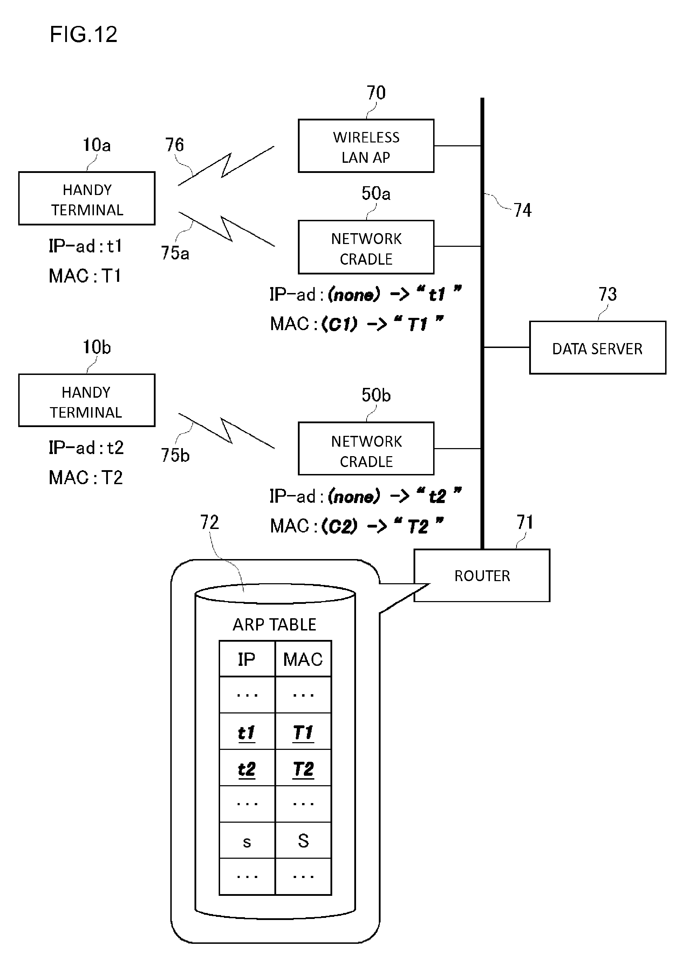

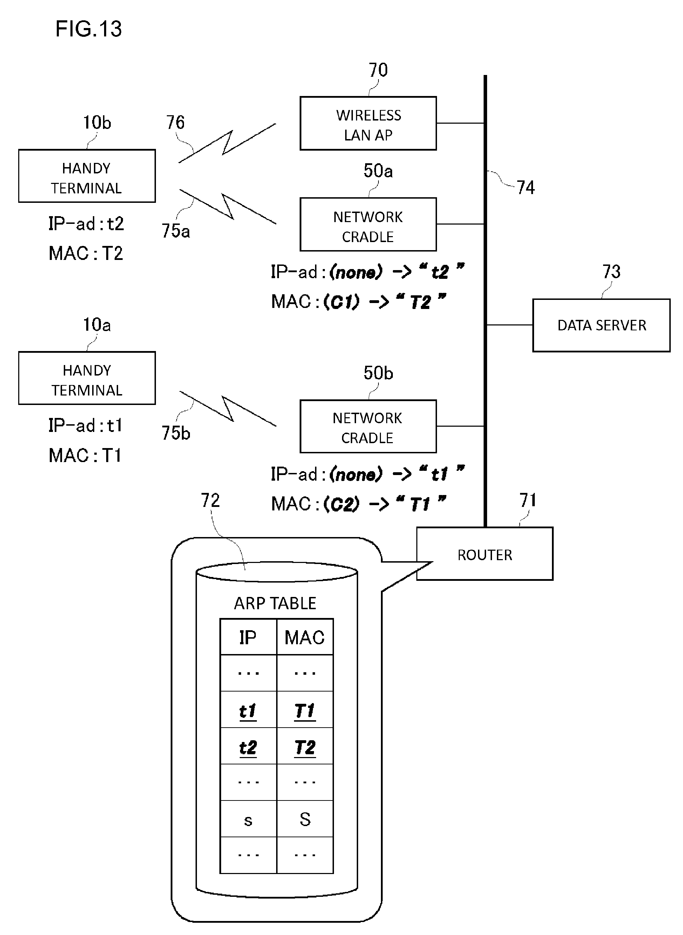

FIGS. 12 and 13 are diagrams illustrating effects of the communication system 1 according to the embodiment. In the examples of FIGS. 12 and 13, two handy terminals 10a and 10b and two network cradles 50a and 50b are illustrated. The MAC address of the network cradle 50a is "C1", the MAC address of the network cradle 50b is "C2", the MAC address of the handy terminal 10a is "T1", the IP address of the handy terminal 10a is "t1", the MAC address of the handy terminal 10b is "T2", and the IP address of the handy terminal 10b is "t2".

In FIG. 12, the handy terminal 10a is mounted on the network cradle 50a, and the MAC address "T1" and the IP address "t1" of the transmission source are added to data that is transmitted to other device (for example, the data server 73) that is connected to the network 74 from the network cradle 50a through a P2P communication channel 75a. The handy terminal 10b is mounted on the network cradle 50b, and the MAC address "T2" and the IP address "t2" of the transmission source are added to data that is transmitted to the other device that is connected to the network 74 from the network cradle 50b through a P2P communication channel 75b. Thus, as illustrated in FIG. 12, in the ARP table 72, a combination of the MAC address "T1" and the IP address "t1" and a combination of the MAC address "T2" and the IP address "t2" are stored.

FIG. 13 illustrates a case in which the network cradles 50a and 50b are switched for the handy terminals 10a and 10b to be mounted. In this example, the handy terminal 10b is mounted on the network cradle 50a, and the MAC address "T2" and the IP address "t2" of the transmission source are added to data that is transmitted to the other device that is connected to the network 74 from the network cradle 50a through the P2P communication channel 75a. The handy terminal 10a is mounted on the network cradle 50b, and the MAC address "T1" and the IP address "t1" of the transmission source are added to data that is transmitted to the other device that is connected to the network 74 from the network cradle 50b through the P2P communication channel 75b. Thus, as illustrated in

FIG. 13, in the ARP table 72, a combination of the MAC address "T1" and the IP address "t1" and a combination of the MAC address "T2" and the IP address "t2" are stored.

As can be seen from the comparison of FIGS. 12 and 13, even when the handy terminals 10a and 10b to be mounted are switched for the network cradles 50a and 50b, the combination that is stored in the ARP table 72 is not changed, so that the ARP table 72 is not updated. That is, in the case in which the communication system 1 according to the embodiment includes the plurality of handy terminals 10 and the plurality of network cradles 50, even when one of the handy terminals 10 is mounted on one of the network cradles 50, the ARP table 72 is not updated. Thus, when the handy terminal 10 is mounted on the network cradle 50, the handy terminal 10 can start communication immediately without update of the ARP table 72.

Further aspects of a communication system, a portable information terminal, a communication adapter, and a communication method according to the embodiment are described below.

The communication system according to the embodiment is a communication system that includes a network in which communication is performed according to a first communication protocol, a communication adapter that is provided on the network, and a portable information terminal that communicates with the communication adapter according to a second communication protocol and is connected to the network through the communication adapter, and the portable information terminal includes a communication unit that transmits, to the communication adapter according to the second communication protocol, second data that includes first data and a second header in the second communication protocol, the first data including a first header that has a specific address of the portable information terminal as a transmission source specific address in the first communication protocol, and the communication adapter includes a mobile terminal communication unit that receives the second data that is transmitted from the portable information terminal according to the second communication protocol, and a network communication unit that transmits the first data that includes, in the first header, the specific address of the portable information terminal as the transmission source specific address of the communication adapter, to the network according to the first communication protocol. It is noted that the first communication protocol may be an IP protocol, and the second communication protocol may be a P2P protocol. In addition, the first communication protocol may be an IP protocol the transmission and reception of which is performed on the Ethernet (R).

When the portable information terminal performs transmission of data as described above, the first data that is obtained by adding the first header in the first communication protocol to data to be transmitted is generated, and the second header in the second communication protocol is added to the first data and transmitted to the communication adapter. Therefore the communication adapter can transmit the data obtained by removing the second header in the second communication protocol to the network. The communication adapter doesn't need to generate newly and add the first header in the first communication protocol to the data. In addition, the first data that is generated by the portable information terminal includes the specific address of the portable information terminal as the transmission source specific address, so that the transmission source specific address of the data that is transmitted from the communication adapter becomes the specific address of the portable information terminal. As a result, the existence of the communication adapter is not seen from other equipment that is connected to the network. The combination of the specific address and the IP address is for the portable information terminal, so that rewrite of the ARP table does not occur, and communication can be started immediately. In addition, the communication adapter uses the specific address of the portable information terminal that is connected to the communication adapter, so that there is no problem of the same specific address being assigned to different portable information terminals. It is noted that, as the specific address of the portable information terminal, a MAC address can be used.

In the communication system according to the embodiment, the network communication unit of the communication adapter may have a configuration in which third data that is transmitted from the network according to the first communication protocol is received, and the received third data and fourth data that includes the second header in the second communication protocol are transmitted to the portable information terminal according to the second communication protocol. In addition, the communication system according to the embodiment, the portable information terminal may further include a determination unit that determines presence or absence of a specific address of the portable information terminal for a transmission destination specific address of the third data in the first communication protocol.

With such a configuration, the communication adapter only has to add and transfer the second header in the second communication protocol, so that the portable information terminal can receive data, if any, in which a specific address of the portable information terminal is set as the transmission destination specific address.

In the communication system according to the embodiment, the communication adapter may have a shape of a cradle on which the portable information terminal is mounted, and a communication interface of the mobile terminal communication unit may be provided at a position at which non-contact communication with the portable information terminal is allowed according to the second communication protocol when the portable information terminal is mounted on the cradle.

With such a configuration, when the portable information terminal is mounted on the cradle type communication adapter, the portable information terminal and the communication adapter become a state in which the portable information terminal and the communication adapter can conveniently be communicated with each other. In addition, in the state in which the portable information terminal is mounted on the cradle type communication adapter, the relative positions of the portable information terminal and the communication adapter are stabilized, so that non-contact communication can be performed stably. The position at which non-contact communication with the portable information terminal can be performed is, for example, a position at which the mobile terminal communication unit of the communication adapter and the communication unit of the portable information terminal are provided in close proximity.

In the communication system according to the embodiment, the communication adapter may stop power supply to the network communication unit when the portable information terminal is not connected to the communication adapter.

When the portable information terminal is not connected to the communication adapter as described above, power supply to the network communication unit of the communication adapter is stopped, and communication with the network side is blocked, so that a trouble that data is transmitted to the portable information terminal by mistake can be prevented.

In the communication system according to the embodiment, the communication adapter may include a power supply unit that is used to charge the portable information terminal, and may start communication with the portable information terminal through the mobile terminal communication unit when the communication adapter detects a state in which power can be supplied to the portable information terminal by the power supply unit.

By starting communication between the communication adapter and the portable information terminal when the state in which power supply to the portable information terminal can be performed is detected as described above, an operation for communication start is conveniently unnecessary.

In the communication system according to the embodiment, the communication adapter may terminate communication with the portable information terminal when the communication adapter detects a state in which power cannot be supplied to the portable information terminal by the power supply unit.

By terminating the communication between the communication adapter and the portable information terminal when the state in which power supply to the portable information terminal cannot be performed is detected as described above, an operation for communication termination is conveniently unnecessary.

The communication system according to the embodiment may include a plurality of portable information terminals and a plurality of communication adapters.

In the communication system that includes the plurality of communication adapters and the plurality of portable information terminals as described above, although a portable information terminal that is mounted to the communication adapter may be changed, there is no problem, in the embodiment, of the same specific address being assigned to different portable information terminals. This embodiment particularly provides usefulness.

The portable information terminal according to the embodiment is a portable information terminal that is used in a communication system that includes a network in which communication is performed according to a first communication protocol and a communication adapter that is provided on the network, communicates with the communication adapter according to a second communication protocol, and is connected to the network through the communication adapter, the portable information terminal includes a communication unit that transmits, to the communication adapter according to the second communication protocol, second data that includes first data and a second header in the second communication protocol, the first data including a first header that has a specific address of the portable information terminal as a transmission source specific address in the first communication protocol.

With such a configuration, similar to the above-described communication system, the data can be transmitted to the network even when the first header in the first communication protocol is not newly generated and added as long as the second header in the second communication protocol is removed, in the communication adapter. The existence of the communication adapter is not seen from other equipment that is connected to the network, and rewrite of the ARP table does not also occur. There is no problem that the communication adapter assigns the same specific address to different portable information terminals.

The portable information terminal according to the embodiment may further include a determination unit that determines presence or absence of a specific address of the portable information terminal for a transmission destination specific address of third data that is received from the network by the communication adapter after the communication unit receives the third data and fourth data that includes the second header in the second communication protocol using the second communication protocol.

With such a configuration, when there is data in which a specific address of the portable information terminal is set as the transmission destination specific address, the portable information terminal can receive the data.

The communication adapter according to the embodiment is a communication adapter that is provided on a network in which communication is performed according to a first communication protocol, and connects a portable information terminal that is allowed to perform communication according to a second communication protocol to the network, and the communication adapter includes a mobile terminal communication unit that receives second data that includes first data and a second header in the second communication protocol, the first data including a first header that has a specific address of the portable information terminal as a transmission source specific address in the first communication protocol, and that is transmitted from the portable information terminal according to the second communication protocol, and a network communication unit that transmits, to the network according to the first communication protocol, the first data that includes, in the first header, the specific address of the portable information terminal as the transmission source specific address.

With such a configuration, similar to the above-described communication system, the existence of the communication adapter is not seen from the other equipment that is connected to the network, and rewrite of the ARP table does not also occur. In addition, there is no problem that the communication adapter assigns the same specific address to different portable information terminals.

A communication method according to the embodiment is a communication method in a communication system that includes a network in which communication is performed according to a first communication protocol, a communication adapter that is provided on the network, and a portable information terminal that communicates with the communication adapter according to a second communication protocol, and is connected to the network through the communication adapter, and the communication method includes the portable information terminal transmitting, to the communication adapter according to the second communication protocol, second data that includes first data and a second header in the second communication protocol, the first data including a first header that has a specific address of the portable information terminal as a transmission source specific address in the first communication protocol, the communication adapter receiving the second data that is transmitted from the portable information terminal according to the second communication protocol, and the communication adapter transmitting the first data that includes, in the first header, the specific address of the portable information terminal as the transmission source specific address, to the network according to the first communication protocol.

In the communication method according to the embodiment, similar to the above-described communication system according to the embodiment, the data can be transmitted to the network even when the first header in the first communication protocol is not newly generated and added as long as the second header in the second communication protocol is removed, in the communication adapter. The existence of the communication adapter is not seen from the other equipment that is connected to the network. In addition, rewrite of the ARP table does not occur, and communication can be started immediately. In addition, there is no problem of the same specific address being assigned to different portable information terminals.

The communication method according to the embodiment may include the communication adapter receiving third data that is transmitted from the network, the communication adapter generating fourth data that is obtained by adding the second header in the second communication protocol to the received third data, and the communication adapter transmitting the fourth data to the portable information terminal according to the second communication protocol.

With such a configuration, the communication adapter only has to add and transfer the second header in the second communication protocol, so that the portable information terminal can receive data, if any, in which a specific address of the portable information terminal is set as the transmission destination specific address.

### Industrial Applicability

The communication system according to the present invention has an excellent effect that communication can be started immediately without occurrence of rewrite of the ARP table, so that it is effective for the communication system and the like that include the plurality of portable information terminals and the plurality of communication adapters.

## Claims

1. A portable information terminal that is used in a communication system that includes a network in which communication is performed according to a first communication protocol and a communication adapter that is provided on the network, communicates with the communication adapter according to a second communication protocol, and is connected to the network through the communication adapter, the portable information terminal comprising:
a communication unit that transmits, to the communication adapter according to the second communication protocol, second data that includes first data and a second header in the second communication protocol, the first data including a first header that has a specific address of the portable information terminal as a transmission source specific address in the first communication protocol.

2. The portable information terminal according to claim 1 further comprising:
a determination unit that determines presence or absence of a specific address of the portable information terminal for a transmission destination specific address of third data that is received from the network by the communication adapter after the communication adapter receives the third data and fourth data that includes the second header in the second communication protocol using the second communication protocol.

3. The portable information terminal according to claims 1 or 2, wherein,
the first communication protocol is an IP protocol.

4. The portable information terminal according to any one of claims 1 to 3, wherein,
the second communication protocol is a P2P protocol.
